# EUROPEAN PATENT SPECIFICATION

(11) **EP 3 175 246 B1**
(45) Date of publication and mention of the grant of the patent: **23.05.2018**
(21) Application number: 15767266.8
(22) Date of filing: 29.07.2015
(51) Int. Cl.: G01N 35/00, C12M 1/28, C12M 1/26, G02B 21/34

(54) **DEVICE AND METHOD FOR HANDLING A PLURALITY OF CASSETTES OR SLIDES FOR SPECIMENS OF BIOLOGICAL MATERIAL**
VORRICHTUNG UND VERFAHREN ZUR HANDHABUNG EINER VIELZAHL VON KASSETTEN ODER OBJEKTTRÄGERN FÜR PROBEN VON BIOLOGISCHEM MATERIAL
DISPOSITIF ET PROCÉDÉ DE MANIPULATION D'UNE PLURALITÉ DE CASSETTES OU DE LAMES POUR DES SPÉCIMENS DE MATÉRIAU BIOLOGIQUE

(30) Priority: 01.08.2014 IT MI20141417
(43) Date of publication of application: 07.06.2017
(73) Proprietor: Diapath S.p.A., 24057 Martinengo (BG) (IT)
(72) Inventor: LIMONTA, Enzo, I-24057 Martinengo (BG) (IT); MANENTI, Giorgio, I-24057 Martinengo (BG) (IT); RIZZATO, Fabio, I-24057 Martinengo (BG) (IT); BERGAMINI, Vladimiro, I-24057 Martinengo (BG) (IT)
(74) Representative: Trupiano, Federica
(86) International application number: PCT/IB2015/055716
(87) International publication number: WO 2016/016814

(56) References cited:
- DE-B3-102010 061 611
- US-A1- 2003 129 756

## Description

### Field of the Invention

The present invention relates to a device and method for handling containers commonly used to preserve, transport and carry out examinations on specimens of tissues, and more in general of biological material, for example in the laboratories of cyto-histopathology, in hospitals, etc.

It should be immediately noted that the expression "handling a plurality of slides or cassettes containing specimens of biological material" is herein and below used to denote that the device and method according to the invention allow carrying out a plurality of operations on the slides, or cassettes.

### Known Background Art

As known, the biological material, such as for example the specimens of tissue coming for example from biopsies or surgeries, is conveniently treated and the corresponding histological sections are placed and preserved on slides, or cassettes.

The term slide identifies in this field a plate, generally made of glass, having standard size, on which the specimen of biological material is placed. Generally the specimen is fixed on the slide through a second plate (coverslip), having size and thickness smaller than the slide, adapted to cover the specimen of biological material placed on the slide. The term slide will be used below to denote the supporting plate of standard size, on which the specimen is fixed, for example by using the second coverslip plate.

The cassettes currently used are generally made of plastic material and have standard size and an inclined surface to allow their correct fixing to the devices used to obtain histological sections of specimens of tissues, called microtomes.

It is common practice marking the cassettes and the slides through identification elements or codes including, for example, data related to the specimen therein contained, data identifying the patient, information on the date and hour of the specimen, etc., and that are applied on a surface of the slide or cassette.

It should be noted that herein and below by the term "identification elements or codes" it is meant any means adapted to store information preferably relating to the specimen contained in the cassette. Generally, cassettes and slides are manually marked by a numerical or alphanumerical code that is manually applied, printed on them or applied through labels, or similar means. Furthermore, other identification elements are currently used, such as for example bar codes (mono-dimensional, bi-dimensional or three-dimensional), or else magnetic tags, also of RFID type.

Since the specimen of biological material is attached on a cassette or slide, the operator will have to handle a high number of them, and a very sensitive issue is to detect rapidly and easily a defined slide, or a defined cassette, for example when new treatments, analyses, etc., must be carried out on the specimen of biological material of a defined slide, or cassette.

It follows that, in the laboratories, analysis centers, hospitals, etc., wherein a high number of cassettes and slides are worked on, there is the need for identifying the slides, or cassettes, in a rapid and simple way, primarily assuring high standards of safety to reduce to the minimum the identification errors.

In particular, it is necessary to handle, and in particular to identify, the cassettes and slides inside the archives, or storage unit, in which they are preserved, in case it is necessary to carry out new operations on a defined specimen of biological material.

In particular, there is the problem of being able to handle and identify the cassettes and/or slides inside the containers in which a certain number of slides or cassettes are preserved.

Currently, a certain number of slides, or cassettes, are supported in containers in which they are overlapped on each other, i.e. so that the main surfaces of two slides, or two cassettes, are overlapped. In some cases, the employed containers allow housing a certain number of cassettes and slides by supporting them vertically, at a certain distance to each other, in a plurality of spaces, to allow the insertion/removal of slides in/from the container.

However, when the slides or cassettes are arranged inside the container, either when they are spaced from one another or else overlapped with the contacting surfaces, is difficult to carry out their identification, and in particular the reading/writing of the identification elements or codes that usually are arranged on a surface of the slide or cassette.

Furthermore, it is difficult to carry out other operations on them, such as for example in order to apply a further identification element or code, laser mark the slide or cassette, apply products or reagents, etc. In fact, inside the container the surfaces of the slides and cassettes, and in particular the main surfaces, are difficult to access.

In these cases the operator must necessarily extract the slides and/or cassettes from the supporting container, for their handling, i.e. to carry out operations on them, such as for example the identification thereof This causes an increase in the time required, in addition to the problem that the slides, once extracted, are not necessarily placed again in the same position inside the container, thereby making even more complex a possible subsequent identification of a certain slide.

The document US8722412 describes a device in which the slides arranged in a container are read after their uplift inside the container itself. However, in this device the slides are lifted contemporaneously and the movement of the lifter causes the fall by gravity of the slides and allows the reading thereof The contemporaneous uplift of all the slides needs the lifter to have an extent at least equal to that of the container. Such a configuration causes excessive size and thus excessive bulk, further causing an undesirable increase of the size of the device. In particular, the subsequent movement of the lifter to cause the fall of the container thus entails a bulk equal to twice the length of the container when the lifter is displaced to cause the fall of all the slides.

Thus it is evident that the optimization of the handling of the slides and cassettes, both for identifying and carrying out operations on them, primarily when they are grouped in a supporting container, is a significant advantage as well as a goal to be achieved by the people skilled in art.

An object of the present invention is to solve the problems of the known art and provide a device, method and apparatus to handle, in a rapid and simple way, the cassettes and/or slides, in particular when a plurality of them are grouped and preserved in a supporting container.

Object of the present invention is to being able to handle cassettes and slides, for example by allowing identifying them or carrying out other operations thereon, without their need to be extracted from the supporting container in which they are housed.

It is a further object of the present invention to being able to handle cassettes and slides, for example by allowing identifying them or carrying out other operations thereon, through a device that is compact and thus of limited size.

The document DE10 2010 061 611 B3 describes a device for handling slides in which the slides successively drop off a lifting element that moves laterally. An optical reading can read the identification code of the slide before it drops.

### Summary of the Invention

This and other objects are achieved by the present invention, that relates to a device for handling slides and/or cassettes and a method for handling slides and/or cassettes, that can be carried out through the device according to the invention, in accordance to aspects and characteristics herein described and/or claimed.

The present invention further relates to an apparatus for handling slides and/or cassettes comprising at least one device for handling slides and/or cassettes, in accordance to aspects and characteristics herein described and/or claimed.

The device according to the present invention for handling slides and/or cassettes for specimens of biological material, comprises at least one supporting container in which a plurality of cassettes, or slides, are inserted and supported in at least one rest position, in which the slides (cassettes) are arranged in succession, preferably in a plurality of spaces.

The slides and/or cassettes for specimens of biological material comprise two opposite main surfaces and one or more minor side surfaces.

The container comprises guide means for the insertion and support of at least one slide, or cassette, in the container, preferably by sliding the slide (or cassette).

The device is characterized by comprising displacing means adapted to displace one or more slides (cassettes) from the rest position towards at least one operative position. According to an aspect of the present invention, the displacing means comprise at least one body contacting directly, or indirectly, at least one slide, or at least one cassette, and comprising at least one inclined and/or curved surface to displace, and preferably lift, at least one slide, or at least one cassette, from the rest position towards at least one operative position. It should be noted that the inclined and/or curved surface of the displacing body can directly or indirectly contact at least part of said at least one slide, or at least one cassette.

Advantageously, the presence of a lifting body comprising at least one inclined and/or curved surface, allows displacing (lifting) a group of slides, or cassettes, from the rest position to the operative position without the need to contemporaneously lift all the slides present in the container, and thus allows decreasing the size of the displacing means and in general of the device.

According to an aspect of the present invention, the presence of at least one inclined and/or curved surface allows shaping the body of the displacing means substantially as a wedge.

Such a shape allows easing the displacement of the slides from the rest position to the operative position.

According to an aspect of the present invention, the inclined and/or curved surface allows the displacement of at least one slide (cassette) to the operative position (lifted), following the lateral, and preferably substantially orthogonal, displacement with respect to the displacement direction of the slide from the rest position to the operative position inside the container.

In fact, according to an aspect of the present invention, the displacement of at least one slide or at least one cassette occurs following the lateral movement of the displacing means, and in particular of the inclined and/or curved surface, with respect to the container, or vice versa.

In general, it is possible to provide for the movement of the displacing means and/or of the container. According to a possible embodiment the displacing means are moved, preferably laterally, with respect to the container that stays steady.

According to an aspect of the present invention, the at least one inclined and/or curved surface is arranged with respect to the container so that the lateral movement of said inclined and/or curved surface with respect to said container, or vice versa, displaces at least one slide or at least one cassette from the rest position towards the at least one operative position.

The displacement of the displacing means and/or the container preferably occurs in a substantially perpendicular way with respect to the displacement direction of the at least one slide (or cassette) from the rest position to the operative position.

According to an aspect of the present invention, the movement of the displacing means and/or container is parallel to the bottom surface of the container, on which the slides (cassettes) are arranged in a rest position. According to an aspect of the present invention, the displacing means, and/or said at least one container, are movable along a line, or parallel to such a line, along which the slides or cassettes are arranged in succession. According to an aspect of the present invention, the cassettes, or slides, are arranged in succession along at least one, preferably straight, line L, and the body of the displacing means, preferably the inclined and/or curved surface, has an extent along the line L smaller than the extent of the container along such a line L.

Such a configuration advantageously allows restraining the size of the device.

Advantageously, in the operative position the slide and/or cassette stay/s housed at least in part in the container, in other words, it is not completely extracted from the container. Advantageously, the displacement to the operative position, while holding the slide or cassette in the container, allows making accessible part of the slide or cassette to carry out operations on the latter.

By doing so it is possible to overcome the problems currently found and discussed above of handling the slides and cassettes when they are supported in containers.

In fact, in the rest position inside the containers, the slides (or cassettes) are arranged in succession so that the surfaces are substantially overlapped, or covered, and thus not easy to access.

Advantageously, by moving one or more slides (or cassettes) while they are inside the container, by displacing them towards an operative position, it is possible that part of the surface of a slide (or cassette) protrudes with respect to one or more slides kept in the rest position.

Advantageously, in the operative position at least one slide is not covered by one or more slides preceding or following it, in the succession along which they are arranged. By doing so, at least part of a slide "protrudes", i.e. comes out of the perimeter defined by the surface of the slide in the rest position and, thus, becomes accessible for carrying out operations on it.

According to an aspect of the present invention, the movement from the rest to the operative position is substantially contrary to the insertion movement of the slide (cassette) in the container until reaching the rest position, but it has an extent lower than the insertion movement in the container, so as to avoid the complete extraction of the slide, or cassette, from the container.

By doing so, it is possible to carry out some operations on the slides without extracting them from the container, with the advantage of considerably reducing the time needed, in addition to assuring the slides (or cassettes) are kept in the same order in the succession in which they are supported in the container.

According to an aspect of the present invention, the displacement to operative position is temporary, for example substantially only for the time needed to carry out one or more operations on the slide placed in operative position, which is subsequently returned to the rest position.

Advantageously, the return to the rest position occurs in a rapid and safe way and can be carried out by the displacing means, or by the means intended for such a function, or can be autonomous, for example by gravity following the movement of the displacing means to a position in which they are not contacting the slide or cassette.

According to a preferred embodiment, the displacing means are movable in order to displace in succession the slides (or cassettes). By doing so, the time needed to carry out the desired operations on the slides is further reduced, while holding them inside the container.

According to a further embodiment, the container in which the slides (cassettes) are supported, is movable with respect to the displacing means of the device which are adapted to displace at least one slide (cassette) from the rest position to the operative position. It is further possible to provide that both the supporting container and the displacing means are movable in order to cause the displacement of at least one slide (cassette) to the operative position.

In other words, according to an aspect of the present invention, the displacing means and/or the at least one container, are movable to displace the slides (or cassettes) in succession from said rest position to said operative position.

According to an aspect of the present invention, the displacing means, and/or the at least one supporting container, is movable to contact the at least one slide, or the at least one cassette, to be displaced from the rest position to the operative position. Advantageously, the device according to the present invention allows carrying out different operations on the cassettes or slides, preferably on a surface thereof, and more preferably on a main surface thereof.

In this regard, the device comprises suitable means to carry out at least one operation on at least one slide, or at least one cassette.

As it will be better shown below, by means of the device and method according to the invention it is possible to carry out the reading/writing of the identification elements or codes of the slides (cassettes), alternatively, or in combination, it is possible for example to carry out the laser marking of the slides or cassettes, it is possible to apply products, such as for example reagents and the likes, or else other specimens of biological material, etc.

According to a preferred embodiment, the device according to the invention allows detecting the position of the slides and/or cassettes present in the supporting container. In particular, it is possible to detect the position occupied by the slide (cassette) in the order of succession in which they are supported in the container. According to a preferred embodiment, the device according to the invention allows detecting the displacement of one or more slides (cassettes) to the operative position. Advantageously, the device and method according to the invention allow coupling the slide (cassette) on which an operation is carried out, with the position of the slide inside the container. By doing so, it is possible to subsequently retrieve a defined slide (or cassette) placed in a defined container.

In fact, according to a preferred aspect of the present invention, the reading of the identification code or elements of the slide (cassette) is associated to the position of the slide inside the container, so as to be able to retrieve the desired slide or cassette, when needed, for example in a storage unit comprising a plurality of containers for supporting slides and cassettes.

Furthermore, according to an advantageous aspect, the device and method according to the invention further allow identifying the container in which the slides, or cassettes, are contained, so that to be able to subsequently retrieve the desired container among a plurality of containers.

In particular, at least one device according to the invention together with a plurality of supporting containers of slides and/or cassettes, can be used in an apparatus for handling cassettes and/or slides, in which preferably there is a storage unit of the slides and/or cassettes, preferably in a plurality of containers.

The present invention further relates to at least one container for supporting a plurality of slides and/or cassettes, preferably in which the slides (cassettes) are arranged in succession, preferably in a plurality of spaces.

The container comprises guide means for the insertion and support of at least one slide, or cassette, in the container, preferably by sliding the slide (or cassette). The supporting container comprises at least one opening to allow the displacing means to contact at least one slide or at least one cassette. According to an aspect of the present invention, the guide means comprise a plurality of protruding fins, preferably adapted to guide at least one minor side surface of the slide or of the cassette. Other characteristics of the supporting container according to the invention are described below.

As mentioned, the present invention further relates to a method for handling slides and/or cassettes for specimens of biological material, which are inserted and supported in at least one container.

According to an aspect of the invention, the method for handling slides and/or cassettes for specimens of biological material, which comprise two opposite main surfaces and one or more minor side surfaces, provides the slides (cassettes) for being inserted and supported in at least one container in at least one rest position in which said cassettes or slides are arranged in succession in a plurality of spaces.

The method comprises the step of displacing at least one slide, or at least one cassette, preferably temporarily, from the rest position towards at least one operative position, while holding the slide, or cassette, inside the container.

According to an aspect of the present invention, the step of displacing at least one slide, or at least one cassette, is carried out through at least one body contacting directly, or indirectly, at least one slide, or at least one cassette, the body having at least one inclined and/or curved surface to displace at least one slide or at least one cassette from said rest position towards at least one operative position.

Advantageously, the method allows carrying out different operations on one or more slides (cassettes) placed in the container, and in particular it allows carrying out their identification (preferably by means of the reading/writing of the identification code) depending on their position in the container, in a rapid and simple way without the need of extracting the slides or cassettes from the container, as it is currently done.

The method avoids the operator completely extracting the slides (or cassettes) from the container and provides a greater safety primarily in the reading and identification, thereby reducing the errors.

The method can be applied in an archiving or storage apparatus of the slides (or cassettes) and allows detecting the position of a slide inside a defined container, which in turn is stored in storage units together with other containers. By doing so it is possible to reduce the time needed for the retrieval of a defined slide (cassette), when needed.

### Brief Description of the Drawings

These and other advantages of the present invention will be evident by the following description and the drawings enclosed by way of illustration only and without limitation, wherein:
- figure 1 is a schematic perspective view of a possible embodiment of the device according to the present invention in which, for greater clarity, side covering elements of the device have been omitted;
- figure 2 is a perspective view of the device according to figure 1, in which for greater clarity the retaining means of the container inside the device have been omitted;
- figure 3 is a front view of the device according to figure 2, in which the displacing means of the slides are moved to displace the slides from the rest position to the operative position, in figure 3 the slides on the right are placed to an operative position or are displacing towards the operative position;
- figure 4 is a perspective view of a possible embodiment of a container usable in the device according to the present invention, in which the slides are arranged in rest position;
- figures 4a and 4b are respectively a top view and a bottom view of the container according to figure 4, in which for greater clarity the slides housed inside it have been eliminated;
- figure 5 shows a schematic perspective view of a slide and standard cassette that can be used in the device according to the present invention.

### Modes of carrying out the Invention

With reference to the attached figures it will be now described a possible embodiment of the device 1 for handling slides 2 and/or cassettes 3, for specimens of biological material.

The device 1 comprises at least one supporting container 10 in which a plurality of slides 2, and/or cassettes 3, are inserted and supported in at least one rest position in which they are arranged in succession in a plurality of spaces S.

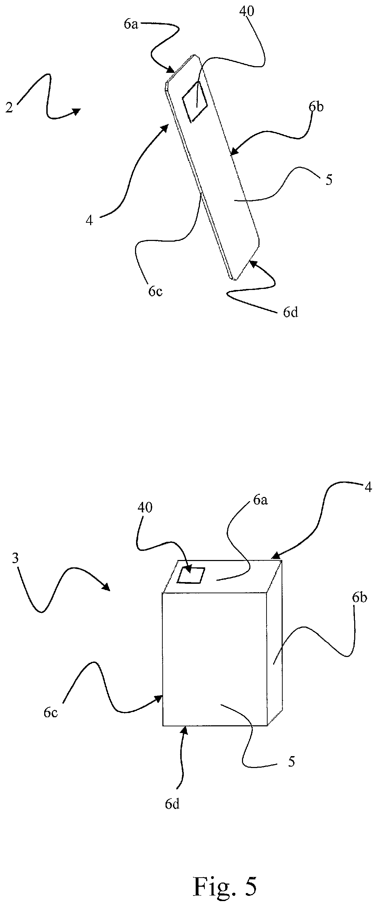

It should be noted that, below, it will also be made particular reference to the slides 2 and, in the attached figures, only slides for specimens of biological material inside the device 1 are shown; as mentioned, the present invention can be further used also with the cassettes 3 or other supporting elements for biological material. Figure 5 shows a perspective view of a slide 2 and a cassette for biological material of standard type, which can be used in the device and method according to the present invention.

In general, the slide 2 and the cassette 3 comprise two main surfaces 4, 5, opposite to each other, and one or more minor side surfaces 6a, 6b, 6c, 6d, preferably four minor side surfaces. In fact, both these elements 2, 3 have a substantially parallelepiped shape. In particular, the slide 2 for biological material is substantially formed by a plate having two main surfaces 4, 5 opposite to each other, which are surfaces on which the specimen of biological material is placed, and four minor side surfaces 6a, 6b, 6c, 6d. Instead, the cassettes 3 of which figure 5 provides a perspective view, have a substantially parallelepiped shape in which two main surfaces 4 and 5 can be identified, opposite to each other, and four side surfaces having lower extent 6a, 6b, 6c and 6d than those of the main surfaces 4, 5. As known, one of the side surfaces 6a is inclined.

As mentioned, the invention is usable with slides 2 and/or cassettes 3, in fact the container 10 can be dimensioned so that to support slides or cassettes only, or a combination thereof. However also other supporting elements, having shape similar to that described of the cassettes and slides, can be used with the device 1 according to the present invention.

Is has also to be noted that, even if in the attached figures containers 10 are shown in which there is only one row of slides placed in succession, according to other possible embodiments, containers 10 can be modified to support more rows of slides or cassettes. Or else two or more containers 10 can be housed in the device 1.

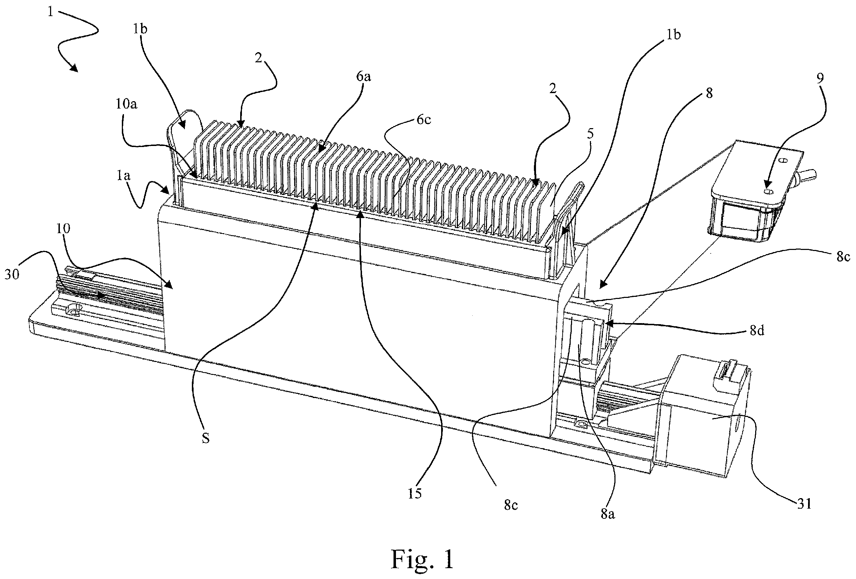

As for example visible in figure 1, the device comprises a seat 1a having a shape substantially complementary to that of one or more containers 10, so that to be able to accept in its inside at least part of at least one container 10.

At the seat 1a, the retaining means 1b of the container (or containers) are advantageously arranged inside the seat 1a. According to a possible embodiment, as for example visible in figure 1, the retaining means comprise one or two fins intended to reversibly engage at least part of the container 10 for the retaining in position inside the seat 1a.

According to an advantageous aspect of the present invention, the container 10 for the support of the slides 2 is removable from the device 1, in other words, the container can be extracted/inserted in the device when one or more operations on the slides 2, or cassettes, housed in the container 10 are intended to be carried out.

Advantageously, a plurality of containers 10 containing different slides used for example in a storage unit, or archive, for the preservation of the slides and/or cassettes, can be used in the device 1 according to the invention.

In particular, an apparatus for handling slides and/or slides according to the invention, comprises at least one device 1 that will be described in more detail herein below, and a plurality of containers 10, each able to support a plurality of slides and/or cassettes. The apparatus can further comprise other devices, such as for example a storage unit (not shown in the attached figures), for archiving slides, by means of the plurality of containers 10.

Coming back to the container 10, according to a preferred embodiment the slides 2, or cassettes 3, are arranged facing each other with at least one main surface 4, 5 of a slide facing at least one main surface 4, 5 of another slide.

However notwithstanding this, other configurations of the arrangement of the cassettes or slides can be used, for example they can be supported in succession, for example facing among them the minor side surfaces.

It has to be further noticed that with the expression "arranged in succession" it is meant that a plurality of slides 2 (or cassettes) are supported in the same container, so that one or more rows of slides are substantially formed.

Preferably, the slides are supported in the container as spaced from each other to allow the insertion/removal movement in/from the container 10, in addition to the imposed displacement, as it will be shown, by convenient displacing means 8 which the device 1 according to the invention is provided with.

The spaces S for accommodating the slides 2 (or cassettes) are spaced from each other so as to allow the housing of the highest number of slides, at the same time allowing to maintain a sufficient distance to each other to allow the insertion/removal movement of the slides in/from the container 10.

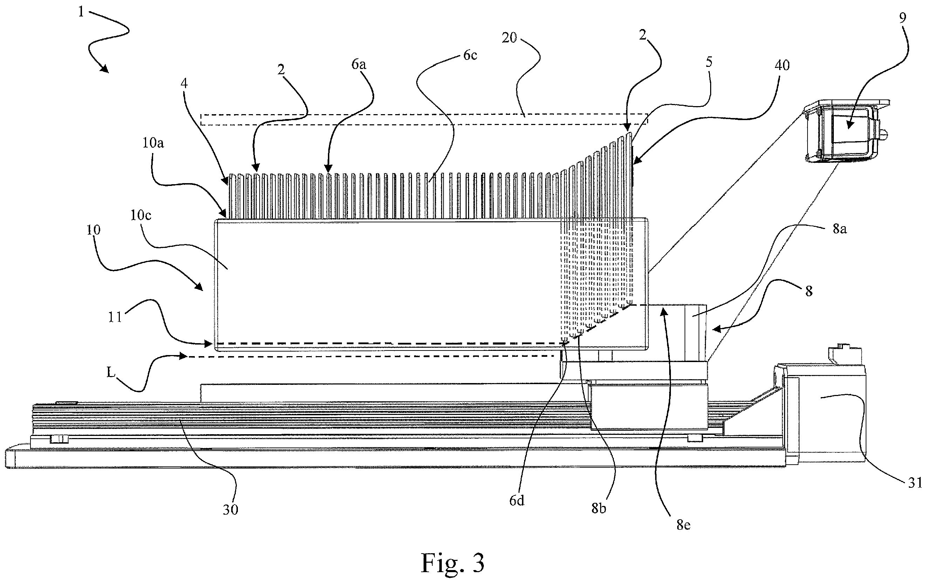

Preferably, the slides are supported as arranged in succession along at least one, preferably straight, line L (see for example figure 3).

According to an aspect of the invention, the main surfaces 4, 5 of the slide (or cassette) are substantially perpendicular to the line L along which the slides are arranged in succession.

According to some possible embodiments not depicted in the attached figures, the slides can be arranged in succession and faced each other, inclined with respect to the line L along which they are arranged in succession.

Furthermore, it is also possible to provide for an arrangement in succession along a curved line, such as for example a circular line. In such case, each slide (or cassette) could be arranged so that the main surface 4, 5 lies, or is parallel to a plane passing through the center of the circular line along which they are arranged in succession.

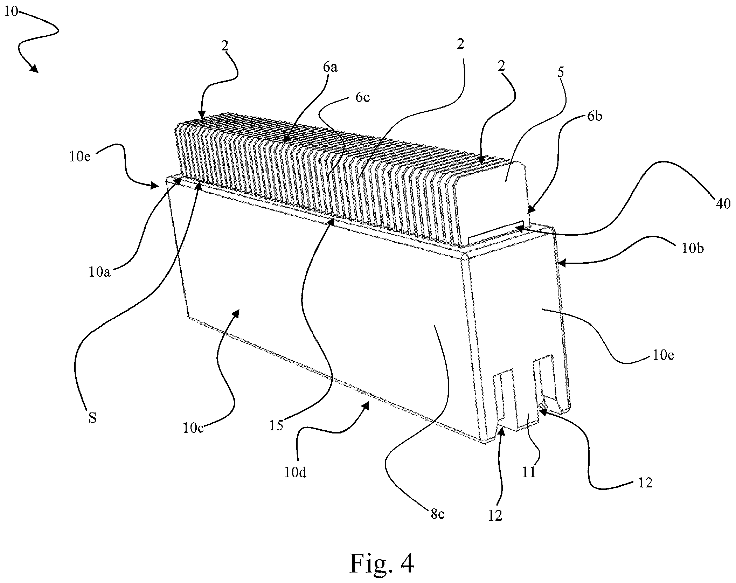

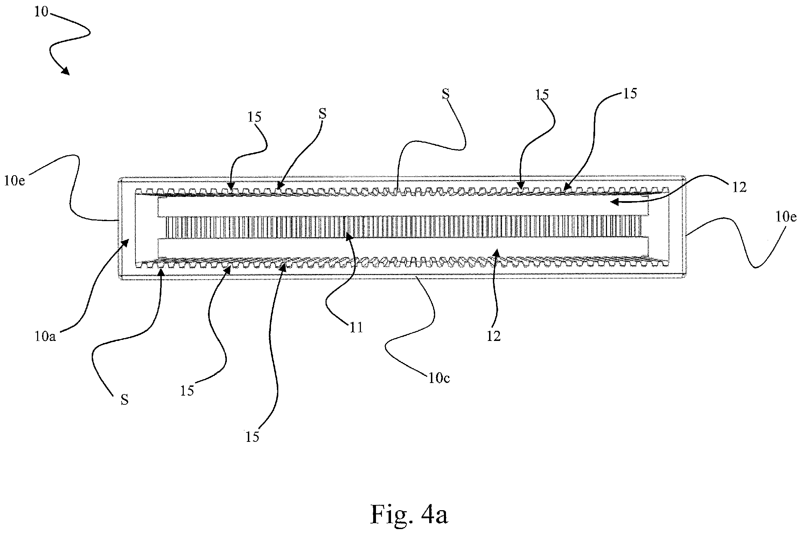

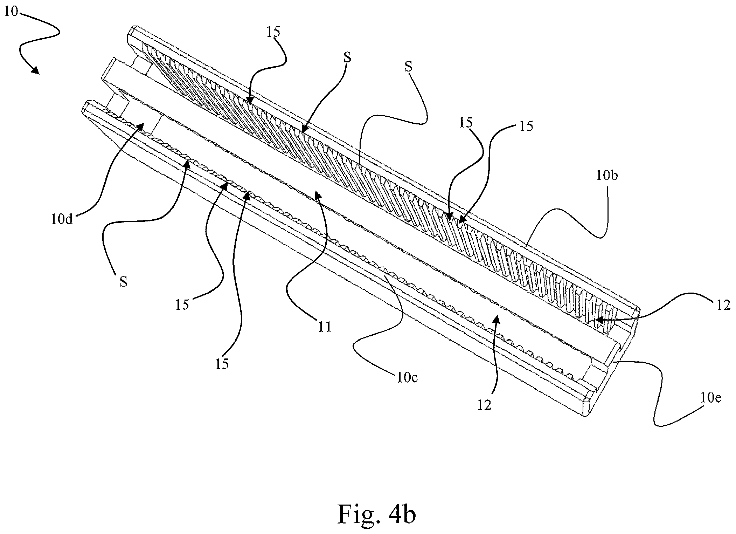

As for example visible in figures 4, 4a and 4b, according to a possible embodiment, the container 10 comprises guide means 15 for the insertion and support of at least one slide, or at least one cassette 3, in the container 10.

Preferably, the guide means 15 support the slides when they are inserted inside the container and preferably also when they reach the rest position.

According to a possible embodiment, the guide means 15 comprise a plurality of protruding fins, preferably adapted to guide at least one minor side surface 6a, 6b, 6c, 6d of the slide 2 (or cassette).

Preferably, the guide means 15 support two opposite, minor side surfaces, 6b, 6c, of the slide.

In particular, the slides or cassettes are supported by two pairs of fins 15 preferably supporting the minor side surfaces 6b, 6c, resulting in the sliding therein. The space S inside which the slide is inserted is defined by two fins 15, and more preferably between two pairs of fins 15.

The guide means 15 and in particular the fins, according to a possible embodiment, extend at least partially from the upper opening 10a of the container, through which the slides are inserted inside the container.

The container 10 have a substantially parallelepiped shape with an open upper side 10a for the insertion of the slides and two opposite side surfaces 10b, 10c on which the guide means 15 are arranged, such as for example the protruding fins, to form a rack in which the slides or cassettes can be inserted. The container further comprises two opposite side walls 10e.

Furthermore, the container 10 comprises at least one supporting element 11 of the slides or cassettes in the rest position. Preferably, the at least one supporting element 11 is arranged at the bottom surface 10d substantially opposite to the opening 10a of the container 10.

Preferably, the supporting element 11 engages a minor side surface 6d of the slides, or cassettes, and supports them from the bottom substantially acting as a stop in the insertion movement of the slides or cassettes inside the container 10.

In the perspective view of figures 1, 2 and 4 all the slides are depicted in the rest position in which they preferably lean with their lower surface 6d on the supporting element 11.

The supporting element 11 also comprises a plurality of protruding fins, preferably parallel to the protruding fins 15 placed on the side surfaces 10b, 10c of the container 10.

According to a preferred embodiment, the supporting element 11 is elongated and occupies only partially the bottom 10d of the container that is preferably, at least partially, open.

Preferably, the supporting element 11 is straight and extends equidistant from the side walls 10b, 10c of the container 10.

Advantageously, the supporting container 10 comprises at least one opening 12 that, as it will be better shown below, allows the displacing means 8 to contact at least one slide 2, or at least one cassette, housed in the container 10.

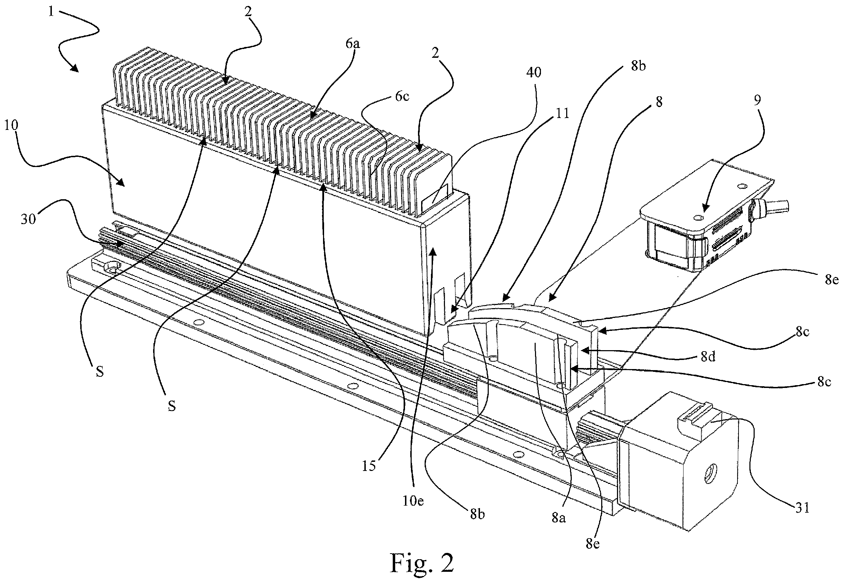

Preferably, the at least one opening 12 is made at the bottom 10d of the container, preferably so as to be adjacent to the supporting element 11. According to a possible embodiment, as for example visible in figures 2 and 4, the at least one opening 12 also extends at least in part of at least at one side surface 10e of the container and, more preferably, at two opposite side surfaces 10e of the container.

According to a possible embodiment, as for example visible in figures 4, 4a and 4b, the container is provided with two openings 12 allowing the displacing means 8 to contact the slides. The openings 12 are substantially straight and extend at the sides of the supporting element 11.

Obviously, other embodiments of the at least one opening 12 of the container 10 can be provided.

As mentioned above, the device 1 further comprises displacing means 8, i.e. means adapted to displace, preferably temporarily, at least one slide 2 and/or at least one cassette 3 from the rest position towards at least one operative position, while holding the slide or cassette inside the container 10.

It should be noted that, in the operative position, the slides or cassettes are housed inside the container 10, in other words they are not completely extracted from that.

It should be noted that, in the rest position, the slides can be completely housed inside the container, i.e. completely placed below the opening 10a through which they are inserted in the container, or else, as it occurs for example in the embodiment depicted in the figures, they can at least partially protrude from the opening 10a and from the side walls 10b, 10c of the container 10.

In the operative position, the slides stay inside the container 10 and protrude from the opening 10a of maximum extent referring to the rest position.

Advantageously, by moving one or more slides 2 (or cassettes) while they are inside the container 10 by displacing them from the rest position, part of the surface of a slide, and in particular part of a main surface 4, 5, protrudes with respect to the other slides kept in the rest position.

As mentioned, the displacing means 8 cause the displacement from the rest position usually achieved by gravity after the insertion of the slides 2 in the container, in which the slides are supported by the supporting element 11, through a movement in a direction substantially opposite to the insertion direction in the container, but without causing its complete extraction from the container 10.

The displacing means 8, preferably, move at least one slide (or at least one cassette) in the guide means 15 of the container 10.

It should be noted that according to a possible embodiment, the insertion movement of the slide 2 (or cassette) in the container 10 and/or the displacement movement of the slide from the rest position substantially occur/s in a plane in which at least one main surface 4, 5 of the slide (or cassette) lies, or in a plane parallel to at least one main surface 4, 5 of the slide 2 (or cassette).

Preferably, the displacement of at least one slide (or cassette) from the rest position towards the operative position, caused by the displacing means 8, is shorter than the displacement needed to achieve the rest position after the insertion of the slide, or cassette, in the container.

In fact, as mentioned above, the slides are advantageously kept inside the container 10 and preferably supported by the guide means 15 of the container when they are displaced to the operative position.

In other words, according to a possible embodiment, and as for example visible in figure 3 in which some slides are displaced to the operative position, the distance of displacement of the slide 2 from the rest position, caused by the displacing means 8, is shorter than the distance run by the slide 2 (or cassette) from the insertion in the container 10 until reaching the rest position.

By doing so, it is possible to carry out one or more operations on the slides without the need to completely extract them from the container 10, thereby considerably reducing the time needed to carry out such operations.

The displacement of the slide 2 from its rest position causes the spacing of its lower side surface 6d from the contact position with the supporting element 11 of the container 10. Depending on the configuration of the displacing means 8 only one slide can be spaced out from the supporting element 11, or else two or more slides (and thus a group of slides) can be spaced out from the supporting element 11.

The slides (cassettes) are displaced, preferably in succession, from the operative position towards the rest position.

As for example visible in the embodiment depicted in figure 3, two or more slides (cassettes) are displaced from the rest position. In this case, in which the displacing means 8 move two or more slides 2 from the rest position, preferably the caused displacement can be differentiated, in other words the slides are gradually spaced out from the rest position in a different way to each other.

It should be noted that, according to an aspect of the present invention, a group of slides or cassettes is displaced by the displacing means 8. Preferably, the caused displacement can be differentiated, in other words the slides are gradually spaced out from the rest position in a different way to each other.

More in detail, as for example visible in the embodiment of figure 3, the slides (cassettes) can be moved by the displacing means 8 so as to be able to reach different distances with respect to the supporting element 11, and thus different distances from the rest position, before reaching the operative position.

In the position depicted in figure 3, the slide more to the right is displaced to the operative position, whereas the subsequent eight slides are displaced from the rest position but they haven't yet reached the operative position.

It should be noted that the means 8 for displacing the slides 2, or cassettes, can be activated independently, so that to be able to cause the displacement of the predetermined cassette or slides, or else the means 8 can be moved to reach, preferably in succession, one or more slides that are wished to be displaced from the rest position. Preferably, the displacing means 8 are movable so that the slides can be displaced in succession.

In fact, the displacing means 8 are movable to contact the at least one slide 2 or the at least one cassette, which is wished to be displaced from the rest position.

According to further possible embodiments, the supporting container 10 is movable with respect to the displacing means 8 that can be in turn fixed or also themselves movable, to cause the displacement of at least one slide (cassette) from the rest position towards the operative position.

Preferably, the displacing means 8 and/or the at least one supporting container 10 are movable along, or parallel to, the line L along which the slides 2, or cassettes, are arranged in succession.

Convenient means 31 for the movement of the means 8 and/or the container 10, such as for example a motor, are conveniently provided.

By doing so it is possible to contact the slides 2 (or cassettes) in succession, causing their displacement towards the operative position, in succession, during the movement of the displacing means 8.

In the embodiment depicted in the figures, the displacing means 8 are movable along a straight line 30 coincident, or parallel to the line L along which the slides 2, or cassettes, are arranged in succession.

The contact of the displacing means 8 with the at least one slide 2 (cassette) that is wished to be displaced can be direct, or indirect, for example through the interposition of an element of the container activated from the outside by the displacing means 8. Preferably, as for example visible in figures 1, 2 and 3, the displacing means 8 directly contact the slides 2 placed in the container 10, preferably through the at least one opening 12 the container 10 is provided with, to allow the slides 2 contained therein accessing from the outside.

According to an aspect of the invention, the displacing means comprise at least one body 8a contacting directly, or indirectly, the slides 2 or cassettes. Preferably, the body 8a comprises at least one inclined and/or curved surface 8b to contact at least part of at least one slide 2 (or at least one cassette).

The at least one inclined and/or curved surface 8b causes the displacement of at least one slide, or at least one cassette, from the rest position to the operative position. The inclination and/or curvature of the surface 8b is obtained with respect to the supporting element 11 so that to be able to modify the distance of the slides 2 therefrom, when they are contacted by the inclined and/or curved surface 8b of the moving body 8a.

The inclined and/or curved surface 8b is arranged with respect to the container so that the lateral movement of the inclined and/or curved surface with respect to the container, or vice versa, displaces at least one slide 2 or at least one cassette 3 from said rest position towards said at least one operative position.

In detail, the substantially wedge-shaped body 8a allows lifting the slides following the lateral movement of the body 8a with respect to the container.

It should be noted that, according to an aspect of the present invention, the lateral movement is a movement substantially parallel to the bottom 10d of the container 10. In other words, according to an aspect of the present invention, the relative movement between the inclined and/or curved surface 8b and the container occurs along the line L, or parallel to line L, along which the slides 2 or cassettes 3 are arranged in succession. Preferably, such a movement direction is substantially perpendicular with respect to the movement direction of the slides (cassettes) inside the guide means 15 of the container 10 between the rest position and the operative position.

It should be noted that, according to a possible embodiment, the body 8a can be fixed and the container is movable with respect to it.

Furthermore, according to an aspect of the invention, the body 8a and preferably the inclined and/or curved surface 8b, extend for a length shorter than the length extent of the container. According to a possible embodiment, the body 8a and preferably the inclined and/or curved surface 8b have smaller extent along the line L (along which the cassettes, or slides, are arranged in succession) than the extent of the container along the line L, or smaller than the bulk of the slides (cassettes) arranged in succession along the line L.

As mentioned, the displacing means 8 and/or the at least one container 10, are movable along a line L or parallel to the line L, along which the slides 2 or cassettes 3 are arranged in succession.

According to an aspect of the invention, the inclined and/or curved surface 8b eases the displacement of the slides 2 from the rest position towards the operative position, as the body 8a is moved along the line L along which the slides 2 are arranged in succession. The body 8a contacts the slides 2 (cassettes) preferably at the minor surface 6d placed in contact with the supporting element 11.

In the embodiment depicted in the figures, the body 8a comprises two protruding portions 8c intended to contact the slides 2. The two protruding portions 8c are separated by a channel 8d to house at least partially the supporting element 11 during the movement of the body 8a to contact, preferably in succession, the slides.

It follows that the slides are contacted from the bottom so that to cause their uplift, preferably through the two protruding portions 8c.

In general, the contact of the displacing means 8 advantageously occurs from the bottom, i.e. with the surface 6d of the slides (or cassettes) supported by the element 11 of the container in the rest position.

According to a possible embodiment, the body 8a shows a flat surface 8e parallel to the container 10 and in particular to the supporting element 11 of the container, and thus some slides are kept to operative position as the body 8a is moved.

It should be noted that, according to a possible embodiment, as for example shown in the attached figures, the body 8a and in particular each protruding portion 8c is provided with, shows a flat surface 8e parallel to the supporting element 11 of the container, and thus some slides are kept to operative position as the body 8a is moved, i.e. at the same distance from the supporting element 11 of the container.

The operations on the slide, such as for example the reading of the identification code placed on it, are preferably carried out on the last slide placed to operative position. As soon as the body 8a of the displacing means 8 leaves the contact with the last slide, the subsequent one will be kept to operative position and so on.

With reference for example to figure 3, the further progress of the means 8 (towards the left in figure 3) causes the return of the first slide 2 to the rest position since it is not supported by the flat surface 8e, while the second slide will be supported in the operative position and will be available to carry out the operations through the means 9. The return of the slide or slides from the operative position towards the rest position preferably occurs automatically, preferably by gravity, when the displacing means leave the contact with the slide that, therefore, is not anymore kept to the operative position. As for example visible in the figures, the displacement of the means 8 causes the slide to go across the surface of the body 8a up to the end of the flat surface 8e, thus causing the fall of the slide towards the rest position since it is not supported anymore by the body 8a.

Obviously, the return of the slide from the operative to the rest position can be obtained in other modes, for example it is possible to provide for another inclined surface of the body 8a to cause the gradual descent towards the rest position as the means 8 are moved along the succession of slides.

The device 1 further comprises operating means 9 carrying out at least one operation on at least part of a slide 2 (or at least one cassette) moved by the displacing means 8 to the operative position.

In general, the device 1 according to the present invention allows carrying out different operations on the slides 2 housed in the container, while holding them inside it, when they are arranged to the operative position.

Operations that can be done, through convenient means 9, are multiple.

According to some possible embodiments, the operating means 9 carrying out the operations are selected among means for reading/writing identification elements or codes 40 of the slides or cassettes, laser marking means, means for applying products, reagents and the likes, or specimens of biological material on the cassette or slide, or a combination thereof

Advantageously, by moving the slide 2 (or cassette) from the rest position towards the operative position, here its portion substantially opposite to that supported by the supporting element 11 will be available for carrying out the operations on it.

In particular, in the operative position, part of the surface of the slide, preferably one of its main surfaces 4, 5 in addition to its upper minor side surface 6a, protrudes from the perimeter of the surface of a slide (or cassette) previously or subsequently placed with respect to it in the succession.

By doing so it is possible to carry out operations on it, without the need to completely remove the slide (or cassette) from the container 10.

Preferably, the means 9 allow carrying out at least one operation on at least one surface of the slide (or cassette), and more preferably to carry out at least one operation on at least one main surface 4, 5 of the slide 2 or cassette.

The operating means 9 of at least one operation on at least one slide 2 (or cassette) are arranged so as to interact, preferably at a distance, with one or more parts or one or more surfaces 4, 5, 6a, 6b, 6c, 6d of the slide 2 (or cassette) placed in the operative position.

The means 9 can be fixed or movable, preferably together with the displacing means 8 of the slides, preferably in their movement along the succession of slides, so as to be able to be in such a position to interact with the at least one slide (or cassette) placed in the operative position.

According to a preferred embodiment, the means 9 comprise reading/writing means to read/write the identification elements or codes 40 of the slide 2 or cassette 3.

The identification codes 40 of the slide 2 are usually arranged at one of the main surfaces 4, 5 thereof, generally in the part placed on top when the slide is placed in the container 10.

By doing so, the displacement from the rest position to the operative position makes visible, or however accessible, the identification code 40 of the slide 2 placed on the portion thereof, which protrudes with respect to the other slides arranged in the container in the rest position.

The same apply to the cassettes 3, in fact the code or other identification element 40 is usually placed on the inclined, minor side surface 6a of the cassette. The cassette is placed in the container 10 so that the surface 6a with the identification code 40 is the surface placed on top.

However, as it is occurring for the slides 2, without the displacement to the operative position also for the cassettes 3, the reading and/or writing of the identification code 40 would be difficult. In fact, the arrangement in succession of the cassettes, and thus a very small space, makes it difficult the reading thereof

On the contrary in the device according to the invention, the displacement of the slides 2 and cassettes 3 from the rest position to the operative position makes accessible the upper part of the slide, the reading of the identification codes 40 or the carrying out of other operations on them becoming easy.

In fact, even if the identification code 40 of the first slide of the succession could be read by the means 9, because it is placed at least in part outside the container 10, the identification codes of the subsequent slides 2 are covered by the slides preceding them in the succession. For this reason, the displacement to operative position through the means 8 in which the slide is lifted with respect to the preceding slide, allows carrying out the reading/writing of the identification code or the carrying out of other operations through the means 9.

Obviously, the writing/reading means 9 the device 1 are provided with, depending on the identification elements 40 of which the cassettes and slides are equipped, are compatible with the employed identification elements and can be selected among optical sensors for the recognition of labels bearing alphanumerical codes or bar codes, video cameras, photo cameras, eventually plugged-in to OCR recognition software, CCD sensors, CMOS sensors, or, in addition, magnetic sensors for reading the RFID markers.

Optical reading means, such as photo cameras or video cameras, or reading means emitting a scanning light beam, such as for example laser reader of bar codes, and the likes, can also be used.

The reading/writing of the identification code of the slide, or cassette, is very advantageous when associating the written/read code with the position of the slide (or cassette) in the container 10, and preferably storing such data. In fact, by doing so it will be possible to subsequently retrieve in a rapid and simple way a predetermined slide in a defined container 10.

Also, the device 1 further allows identifying the container 10 in which the slides or cassettes are supported, so as to associate the slides to a defined container. In this regard, also the container can be provided with similar identification codes or elements (not shown) that can be read/written by the device 1, for example by using the same means 9 used for reading/writing identification codes of the slides (or cassettes). Advantageously, the device 1 further comprises at least one sensor 20 for identifying the position of the slides 2, or cassettes, inside the container 10. In general, the at least one sensor 20 detects if a slide (cassette) is displaced to the operative position. Preferably, the at least one sensor 20 of the device identifies the at least one slide (cassette) displaced to the operative position.

Preferably, the at least one sensor 20 identifies the position of the slide inside the spaces S in which they are supported.

According to a possible embodiment, the at least one sensor 20 determines the presence of the slides or cassettes at the respective space S in the container 10, preferably by detecting the presence of the slide, or cassette, when it is in the operative position and/or when it is in the rest position.

For example, the at least one sensor 20 can be activated when a slide (cassette) leaves and/or reaches the operative position in which it is possible to carry out an operation on it and, preferably, the reading/writing of the identification codes.

According to a possible embodiment, the at least one sensor 20 can be activated when a slide (cassette) leaves and/or reaches the rest position so as to consequently identify the slide reaching or leaving the operative position in which it is possible to carry out an operation on it and, preferably, the reading/writing of the identification codes.

In particular, the at least one sensor can be activated when the slide in the respective space S is placed in the rest position, or to the operative position, as schematically depicted for example in figure 3.

According to a possible embodiment, the at least one sensor 20 comprises one or more photocells, preferably of the through-beam light barrier type.

According to some possible embodiments, one or more sensors 20 can be arranged at the spaces S or the at least one sensor can be integrated into the displacing means 8, so that the slide or cassette can be identified when contacted by the displacing means 8 and displaced towards the operative position.

According to an aspect of the present invention, one or more sensors 20 are movable, preferably along the succession of slides (cassettes). Preferably, at least one sensor 20 is movable along the line L, or parallel to line L, along which the slides 2 (cassettes 3) are arranged in succession.

In alternative, the supporting container 10 can be movable with respect to at least one sensor 20.

According to a further possible embodiment, the operating means 9 carrying out at least one operation on at least one slide 2, or at least one cassette, and in particular the means for reading/writing identification elements or codes 40, can perform the function of detecting if the at least one slide (cassette) has been displaced to the operative position and/or detecting the position of the slides 2, or cassettes, inside the container 10.

In fact, the reading/writing means, depending on the imagine detected, or else by acting on their operating parameters, can detect if a slide (cassette) has been displaced to the operative position.

According to a preferred aspect of the present invention, the means 9 for carrying out at least one operation on at least one slide 2, or at least one cassette, are associated to the sensor 20, or sensors, for identifying the position of the slides 2 or cassettes.

The identification of the position of the slide inside the container is advantageous since it allows carrying out the at least one operation on the predetermined slide.

In particular, when carrying out the reading/writing of the slide 2 (or cassette) by means of convenient means 9, it is possible to associate the read and/or written information with the slide 2 placed in a defined position inside the container.

As mentioned above, the ability to store such information will allow retrieving rapidly and easily the slide, or cassette, in a subsequent step, for example after the container containing the slides has been stored in a storage unit.

The device can further comprise at least one control unit, not shown in the attached figures, for handling various components, and a storage unit for storing data, for example relating to the positions of a defined slide inside the container.

The device 1 can be connected to an external control unit, such as for example a personal computer or other device of an apparatus for handling cassettes and slides. The storage unit can also be placed in another device to which the device 1 according to the invention is connected.

The present invention further relates to a method for handling slides 2 and/or cassettes 3, for specimens of biological material. The method is preferably carried out through at least one device 1.

The method allows handling, i.e. carrying out, at least one operation on a plurality of slides 2 (or cassettes 3) inserted and supported in at least one container 10 in at least one rest position in which the slides are arranged in succession in a plurality of spaces S. The method comprises the step of displacing at least one slide 2, or at least one cassette 3, preferably temporarily, from the rest position towards at least one operative position, while holding the slide 2, or cassette, inside the container 10.

The method can comprise the step of moving the container 10 and/or convenient displacing means 8 of the slides to cause the movement of one or more slides to the operative position, as for example described above.

With reference to the embodiment depicted in the figures, the method comprises the step of moving the displacing means 8, and in particular the body 8a, preferably along the guide 30, so that to displace in succession the slides 2 to operative position. According to an aspect of the present invention, the movement of the body 8a having at least one inclined and/or curved surface 8b, causes the displacement of at least one slide 2 (cassette 3) from the rest position towards at least one operative position. In particular, according to an aspect of the invention, the displacement of the slides is carried out through the lateral displacement of the inclined surface 8b.

Once all of the slides 2 have been displaced and the predetermined operations have been carried out on them, preferably when the container 10 is removed from the device 1, the means 8 are returned to the initial position depicted for example in figure 2, to carry out a new displacement of other slides placed in another container 10. Furthermore, the method comprises the step of carrying out at least one operation on at least one slide 2, or at least one cassette, moved to the operative position. Preferably, the method comprises the step of carrying out at least one operation on at least one surface 4, 5, 6a, 6b, 6c, 6d of the slide 2, or cassette, and more preferably the step of carrying out at least one operation on at least one main surface 4, 5 of the slide or cassette.

The method according to the invention preferably comprises the step of reading and/or writing identification codes of the slides 40 (or cassettes) placed in the container 10. It should be noted that the method can for example comprise a preceding step in which identification codes are attached to the slides or cassettes.

Furthermore, the method comprises the step of detecting if one or more slides are displaced to the operative position and/or identifying the position of the slides 2, or cassettes, inside the at least one container 10. According to a possible embodiment, as previously described, at least one sensor 20 to carry out such steps of the method, can be provided.

Advantageously, the identification of the position allows carrying out one or more operations on the predetermined slide, or else associating the information read/written on the identification codes 40 with the position of the corresponding slide inside the container.

The method can further comprise the step of identifying the container 10 in which the slides 2 and/or cassettes are supported.

More information on the arrangement of the slides or cassettes, how the operations on the slides have been carried out, the displacement to the operative position, have previously been shown with reference to the device 1 and can also be applied to the method according to the invention.

## Claims

1. Device (1) for handling slides (2), and/or cassettes (3), for specimens of biological material, said slides or cassettes comprising two opposite main surfaces (4, 5) and one or more minor side surfaces (6a, 6b, 6c, 6d), said device comprising at least one supporting container (10) in which a plurality of cassettes or slides are inserted and supported in at least one rest position wherein said cassettes or slides are arranged in succession, preferably in a plurality of spaces (S), said container (10) comprising guide means (15) for the insertion and support of at least one slide or cassette in said container (10), the device comprising displacing means (8) to displace at least one slide (2) or at least one cassette (3) from said rest position towards at least one operative position, while holding said slide or said cassette inside said container (10), **characterized in that** said displacing means comprise at least one body (8a) contacting directly, or indirectly, at least one slide (2), or at least one cassette, the body (8a) comprising at least one inclined and/or curved surface (8b) to displace the at least one slide (2) or at least one cassette (3) from said rest position towards at least one operative position, wherein said displacing means (8) are configured to move relatively to said at least one container (10) along a line (L), or parallel to said line (L), along which the slides (2) or cassettes (3) are arranged in succession such that the slides (2) or cassettes (3) are displaced in succession from said rest position to said operative position.

2. Device according to claim 1, wherein said at least one inclined and/or curved (8b) surface is arranged, with respect to said container, so that the lateral movement of said inclined and/or curved surface (8b), with respect to said container, or vice versa, displaces at least one slide (2) or at least one cassette (3) from said rest position towards said at least one operative position.

3. Device according to claim 1 or 2, wherein said body (8a) of the displacing means, preferably said inclined and/or curved surface (8b), having an extent along said line L smaller than the extent of said container along said line L.

4. Device according to any one of the preceding claims, wherein said displacing means (8) are configured to temporarily move said at least one slide (2), or said at least one cassette (3), to said operative position, preferably said displacing means (8) are configured to displace a group of said cassettes or slides, preferably with different displacements, from said rest position to said operative position.

5. Device according to any one of the preceding claims, wherein said container (10) comprises at least one supporting element (11) to support at least one slide (2), or at least one cassette (3), in the rest position, preferably said at least one supporting element (11) being arranged at the bottom (10d) of said container (10).

6. Device according to claim 5, wherein said displacing means (8) space out at least one slide (2), or at least one cassette, from said at least one supporting element (11) of said container (10), to displace said at least one slide, or said at least one cassette, towards said operative position.

7. Device according to any one of the preceding claims, **characterized in that** said at least one supporting container (10) for the plurality of slides, or cassettes, is removable from said device (1), preferably said at least one supporting container (10) comprises at least one opening (12) to allow said displacing means (8), preferably said at least one inclined and/or curved surface (8b), to contact at least one slide (2), or at least one cassette (3).

8. Device according to any one of the preceding claims, **characterized by** comprising operating means (9) to carry out at least one operation on at least one slide (2), or at least one cassette, which is moved by said displacing means (8) to said operative position, preferably said operating means (9) carrying out at least one operation on at least one surface (4, 5, 6a, 6b, 6c, 6d) of the slide (2), or cassette, and more preferably said operating means (9) carrying out at least one operation on at least one main surface (4, 5) of the slide, or cassette.

9. Device according to claim 8, wherein said operating means (9) of at least one operation on at least one slide (2), or at least one cassette, are selected among means for reading/writing identification elements or codes (40) of the slides (2), or cassettes, laser marking means, means for applying products or specimens of biological material on the cassette or slide, or a combination thereof

10. Device according to any one of the preceding claims, **characterized by** comprising at least one sensor (20) for identifying the position of the slides (2), or cassettes, inside the container (10), and/or for detecting the displacement of one or more slides (2), or cassettes, to said operative position, preferably said operating means (9) to carry out at least one operation on at least one slide (2), or at least one cassette, are coupled to said at least one sensor (20) for identifying the position of the slides (2), or cassettes, to carry out the at least one operation on the predetermined slide.

11. Apparatus for handling slides (2), and/or cassettes (3), for specimens of biological material, comprising at least one device (1) according to any one of the preceding claims, a plurality of supporting containers (10) to support a plurality of slides or cassettes which can be inserted into said at least one device (1), preferably said apparatus further comprising at least one storage unit of said containers (10).

12. Method for handling slides (2), and/or cassettes (3), for specimens of biological material, preferably through at least one device (1) according to any one of the preceding claims, said slides or cassettes comprising two opposite main surfaces (4, 5) and one or more minor side surfaces (6a, 6b, 6c, 6d) and being inserted and supported in at least one container (10) in at least one rest position in which said cassettes or slides are arranged in succession in a plurality of spaces (S), **characterized by** comprising the step of displacing at least one slide (2), or at least one cassette (3), preferably temporarily, from said rest position towards at least one operative position, while holding said slide or said cassette inside said container (10), through at least one body (8a) contacting directly, or indirectly, at least one slide (2), or at least one cassette, said body comprising at least one inclined and/or curved surface (8b) to displace the at least one slide (2) or at least one cassette (3) from said rest position towards at least one operative position, wherein said displacing means (8) are configured to move relatively to said at least one container (10) along a line (L), or parallel to said line (L), along which the slides (2) or cassettes (3) are arranged in succession such that the slides (2) or cassettes (3) are displaced in succession from said rest position to said operative position.

13. Method according to claim 12, **characterized by** comprising the step of carrying out at least one operation on at least one slide (2), or at least one cassette, which is moved to said operative position, preferably the step of carrying out at least one operation on at least one surface (4, 5, 6a, 6b, 6c, 6d) of the slide (2), or cassette, and more preferably the step of carrying out at least one operation on at least one main surface (4, 5) of the slide, or cassette.

14. Method according to claim 12 or 13, **characterized by** comprising the step of identifying the position of the slides (2), or cassettes, inside the at least one container (10).

## Patentansprüche

1. Vorrichtung (1) zur Handhabung von Objektträgern (2) und/oder Kassetten (3) für Proben biologischen Materials, wobei die Objektträger oder Kassetten zwei gegenüberliegende Hauptoberflächen (4, 5) und eine oder mehrere kleinere Nebenseitenflächen (6a, 6b 6c, 6d) aufweisen, wobei die Vorrichtung mindestens einen Tragbehälter (10) aufweist, in dem mehrere Kassetten oder Objektträger in mindestens einer Ruheposition eingesetzt und gehalten werden, wobei die Kassetten oder Objektträger nacheinander angeordnet werden, vorzugsweise in einer Vielzahl von Räumen (S), wobei der Behälter (10) Führungsmittel (15) zum Einführen und Halten mindestens eines Objektträgers oder einer Kassette in dem Behälter (10) aufweist, wobei die Vorrichtung Verschiebemittel (8) aufweist zum Verschieben mindestens eines Objektträgers (2) oder mindestens einer Kassette (3) aus der Ruheposition in mindestens eine Betriebsposition, während der Objektträger oder die Kassette im Behälter (10) gehalten wird, **dadurch gekennzeichnet, dass** die Verschiebemittel mindestens einen Körper (8a), der direkt oder indirekt mindestens einen Objektträger (2) oder mindestens eine Kassette berührt, wobei der Körper (8a) mindestens eine geneigte und/oder gekrümmte Oberfläche (8b) aufweist, um den mindestens einen Objektträger (2) oder die mindestens eine Kassette (3) aus der Ruhelage in Richtung mindestens einer Betriebsposition zu verschieben, wobei die Verschiebemittel (8) konfiguriert sind, sich relativ zu dem mindestens einen Behälter (10) entlang einer Linie (L) oder parallel zur der Linie (L) zu bewegen, entlang der die Objektträger (2) oder Kassetten (3) nacheinander angeordnet sind, so dass die Objektträger (2) oder Kassetten (3) nacheinander aus der Ruheposition in die Betriebsposition verschoben werden.

2. Vorrichtung gemäß Anspruch 1, wobei die mindestens eine geneigte und/oder gekrümmte (8b) Oberfläche in Bezug auf den Behälter so angeordnet ist, dass die seitliche Bewegung der geneigten und/oder gekrümmten Oberfläche (8b) in Bezug auf den Behälter, oder umgekehrt, mindestens einen Objektträger (2) oder mindestens eine Kassette (3) aus der Ruheposition in Richtung der mindestens einen Betriebsposition verschiebt.

3. Vorrichtung gemäß Anspruch 1 oder 2, wobei der Körper (8a) der Verschiebemittel, vorzugsweise die geneigte und/oder gekrümmte Oberfläche (8b), entlang der Linie L eine Ausdehnung aufweist, die kleiner als die Ausdehnung des Behälters entlang der Linie L ist.

4. Vorrichtung gemäß irgendeinem der vorhergehenden Ansprüche, bei der die Verschiebemittel (8) so konfiguriert sind, dass sie den mindestens einen Objektträger (2) oder die mindestens eine Kassette (3) vorübergehend in die Betriebsposition bewegen, bevorzugt sind die Verschiebemittel (8) so konfiguriert, dass sie eine Gruppe der Kassetten oder Objektträger, vorzugsweise mit unterschiedlichen Verschiebungen, von der Ruheposition in die Betriebsposition verschieben.

5. Vorrichtung gemäß irgendeinem der vorhergehenden Ansprüche, wobei der Behälter (10) mindestens ein Stützelement (11) umfasst, um mindestens einen Objektträger (2) oder mindestens eine Kassette (3) in der Ruheposition zu halten, wobei vorzugsweise das mindestens eine Stützelement (11) am Boden (10d) des Behälters (10) angeordnet ist.

6. Vorrichtung gemäß Anspruch 5, wobei die Verschiebemittel (8) mindestens einen Objektträger (2) oder mindestens eine Kassette von dem mindestens einen Stützelement (11) des Behälters (10) beabstandet sind, um den mindestens einen Objektträger oder die mindestens eine Kassette in Richtung der Betriebsposition zu verschieben.

7. Vorrichtung gemäß irgendeinem der vorhergehenden Ansprüche, **dadurch gekennzeichnet, dass** der wenigstens eine Tragbehälter (10) für die Vielzahl von Objektträgern oder Kassetten von der Vorrichtung (1) entfernbar ist, wobei vorzugsweise mindestens ein Tragbehälter (10) mindestens eine Öffnung (12) aufweist, um den Verschiebemitteln (8), vorzugsweise der mindestens einen geneigten und/oder gekrümmten Oberfläche (8b), zu ermöglichen, mindestens einen Objektträger (2) oder mindestens eine Kassette (3) zu berühren.

8. Vorrichtung gemäß irgendeinem der vorhergehenden Ansprüche, **gekennzeichnet durch** das Vorhandensein einer Betätigungseinrichtung (9) zum Ausführen mindestens einer Operation an mindestens einem Objektträger (2) oder mindestens einer Kassette, der oder die durch die Verschiebemittel (8) in die Betriebsposition bewegt wird, wobei vorzugsweise die Betätigungseinrichtung (9) die mindestens eine Operation an mindestens einer Oberfläche (4, 5, 6a, 6b, 6c, 6d) des Objektträgers (2) oder der Kassette ausführt, und wobei weiter bevorzugt die Betätigungseinrichtung (9) die mindestens eine Operation an mindestens einer Hauptfläche (4, 5) des Objektträgers oder der Kassette ausführt.

9. Vorrichtung gemäß Anspruch 8, wobei die Betätigungseinrichtung (9) für mindestens eine Operation an mindestens einem Objektträger (2) oder mindestens einer Kassette ausgewählt ist aus Mitteln zum Lesen/Schreiben von Identifikationselementen oder Codes (40) der Objektträger (2) oder Kassetten, Lasermarkierungsmittel, Mittel zum Aufbringen von Produkten oder Proben biologischen Materials auf die Kassette oder den Objektträger oder eine Kombination davon.

10. Vorrichtung gemäß irgendeinem der vorhergehenden Ansprüche, **gekennzeichnet durch** das Vorhandensein mindestens eines Sensors (20) zum Identifizieren der Position der Objektträger (2) oder Kassetten innerhalb des Behälters (10) und/oder zum Erfassen der Verschiebung von einem oder mehreren Objektträgern (2) oder Kassetten in die Betriebsposition, wobei vorzugsweise die Betätigungseinrichtung (9) zum Ausführen mindestens einer Operation an mindestens einem Objektträger (2) oder mindestens einer Kassette mit dem mindestens einen Sensor (20) gekoppelt ist, zum Identifizieren der Position der Objektträger (2) oder Kassetten, um die mindestens eine Operation an dem vorbestimmten Objektträger auszuführen.

11. Vorrichtung zum Handhaben von Objektträgern (2) und/oder Kassetten (3) für Proben aus biologischem Material, umfassend mindestens eine Vorrichtung (1) gemäß irgendeinem der vorhergehenden Ansprüche, eine Vielzahl von Tragbehältern (10) zum Halten einer Vielzahl von Objektträgern oder Kassetten, die in die wenigstens eine Vorrichtung (1) eingesetzt werden können, wobei die Vorrichtung vorzugsweise weiterhin wenigstens eine Lagereinheit für die Behälter (10) umfasst.

12. Verfahren zur Handhabung von Objektträgern (2) und/oder Kassetten (3) für Proben biologischen Materials, vorzugsweise durch mindestens eine Vorrichtung (1) gemäß irgendeinem der vorhergehenden Ansprüche, wobei die Objektträger oder Kassetten zwei gegenüberliegende Hauptoberflächen aufweisen (4, 5) und eine oder mehrere Nebenseitenflächen (6a, 6b, 6c, 6d) und in mindestens einen Behälter (10) in mindestens einer Ruhestellung, in der die Kassetten oder Objektträger hintereinander in einer Vielzahl von Räumen (S) angeordnet, eingesetzt und gelagert werden, **gekennzeichnet durch** das Vorhandensein eines Schrittes des Verschiebens, vorzugsweise zeitweilig, mindestens eines Objektträgers (2) oder mindestens einer Kassette (3) aus der Ruheposition in mindestens eine Betriebsposition, während der Objektträger oder die Kassette innerhalb des Behälters (10) durch mindestens einen Körper (8a) gehalten wird, der direkt oder indirekt mindestens einen Objektträger (2) oder mindestens eine Kassette berührt, wobei der Körper mindestens eine geneigte und/oder gekrümmte Oberfläche aufweist (8b), um den mindestens einen Objektträger (2) oder die mindestens eine Kassette (3) von der Ruheposition in Richtung der mindestens einen Betriebsposition zu verschieben, wobei die Verschiebemittel (8) konfiguriert sind, sich relativ zu dem mindestens einen Behälter (10) entlang einer Linie (L) oder parallel zur der Linie (L) zu bewegen, entlang der die Objektträger (2) oder Kassetten (3) nacheinander angeordnet sind, so dass die Objektträger (2) oder Kassetten (3) nacheinander aus der Ruheposition in die Betriebsposition verschoben werden.

13. Verfahren gemäß Anspruch 12, **gekennzeichnet durch** den Schritt des Ausführens mindestens einer Operation an mindestens einem Objektträger (2) oder mindestens einer Kassette, der oder die in die Betriebsposition bewegt wird, vorzugsweise den Schritt des Ausführens mindestens einer Operation an mindestens einer Oberfläche (4, 5, 6a, 6b, 6c, 6d) des Objektträgers (2) oder der Kassette und besonders bevorzugt den Schritt des Ausführens mindestens einer Operation an mindestens einer Hauptoberfläche (4, 5) des Objektträgers oder der Kassette.

14. Verfahren gemäß Anspruch 12 oder 13, **gekennzeichnet durch** den Schritt des Identifizierens der Position der Objektträger (2) oder Kassetten innerhalb des mindestens einen Behälters (10).

## Revendications

1. Dispositif (1) pour la manipulation de lames (2), et/ou de cassettes (3), pour des spécimens de matériau biologique, lesdites lames ou cassettes comprenant deux surfaces principales opposées (4, 5) et une ou plusieurs surfaces latérales mineures (6a, 6b, 6c, 6d), ledit dispositif comprenant au moins un contenant de support (10) dans lequel une pluralité de cassettes ou de lames sont insérées et supportées dans au moins une position de repos dans laquelle lesdites cassettes ou lames sont disposées successivement, de préférence dans une pluralité d'espaces (S), ledit contenant (10) comprenant des moyens de guidage (15) pour l'insertion et le support d'au moins une lame ou cassette dans ledit contenant (10), le dispositif comprenant des moyens de déplacement (8) pour déplacer au moins une lame (2) ou au moins une cassette (3) de ladite position de repos vers au moins une position opérationnelle, tout en maintenant ladite lame ou ladite cassette à l'intérieur dudit contenant (10), **caractérisé en ce que** lesdits moyens de déplacement comprennent au moins un corps (8a) entrant en contact, directement ou indirectement, avec au moins une lame (2), ou au moins une cassette, le corps (8a) comprenant au moins une surface inclinée et/ou courbée (8b) pour déplacer l'au moins une lame (2), ou au moins une cassette (3), de ladite position de repos vers au moins une position opérationnelle, dans lequel lesdits moyens de déplacement (8) sont configurés pour se déplacer par rapport audit au moins un contenant (10) le long d'une ligne (L), ou parallèlement à ladite ligne (L), le long de laquelle les lames (2) ou cassettes (3) sont disposées successivement de sorte que les lames (2) ou cassettes (3) soient déplacées successivement de ladite position de repos à ladite position opérationnelle.

2. Dispositif selon la revendication 1, dans lequel ladite au moins une surface inclinée et/ou courbée (8b) est disposée, par rapport audit contenant, de sorte que le mouvement latéral de ladite surface inclinée et/ou courbée (8b), par rapport audit contenant, ou inversement, déplace au moins une lame (2) ou au moins une cassette (3) de ladite position de repos vers ladite au moins une position opérationnelle.

3. Dispositif selon la revendication 1 ou 2, dans lequel ledit corps (8a) des moyens de déplacement, de préférence ladite surface inclinée et/ou courbée (8b), ayant une étendue le long de ladite ligne L plus petite que l'étendue dudit contenant le long de ladite ligne L.

4. Dispositif selon l'une quelconque des revendications précédentes, dans lequel lesdits moyens de déplacement (8) sont configurés pour déplacer provisoirement ladite au moins une lame (2), ou ladite au moins une cassette (3), à ladite position opérationnelle, de préférence lesdits moyens de déplacement (8) sont configurés pour déplacer un groupe desdites cassettes ou lames, de préférence avec des déplacements différents, de ladite position de repos à ladite position opérationnelle.

5. Dispositif selon l'une quelconque des revendications précédentes, dans lequel ledit contenant (10) comprend au moins un élément de support (11) pour supporter au moins une lame (2), ou au moins une cassette (3), dans la position de repos, de préférence ledit au moins un élément de support (11) étant disposé au bas (10d) dudit contenant (10).

6. Dispositif selon la revendication 5, dans lequel lesdits moyens de déplacement (8) espacent au moins une lame (2), ou au moins une cassette, dudit au moins un élément de support (11) dudit contenant (10), pour déplacer ladite au moins une lame, ou ladite au moins une cassette, vers ladite position opérationnelle.

7. Dispositif selon l'une quelconque des revendications précédentes, **caractérisé en ce que** ledit au moins un contenant de support (10) pour la pluralité de lames ou de cassettes peut être retiré dudit dispositif (1), de préférence ledit au moins un contenant de support (10) comprend au moins une ouverture (12) pour permettre auxdits moyens de déplacement (8), de préférence à ladite au moins une surface inclinée et/ou courbée, d'être en contact avec au moins une lame (2), ou au moins une cassette (3).

8. Dispositif selon l'une quelconque des revendications précédentes, **caractérisé en ce qu'**il comprend des moyens opérationnels (9) pour réaliser au moins une opération sur au moins une lame (2), ou au moins une cassette, qui est déplacée par lesdits moyens de déplacement (8) à ladite position opérationnelle, de préférence lesdits moyens opérationnels (9) réalisant au moins une opération sur au moins une surface (4, 5, 6a, 6b, 6c, 6d) de la lame (2) ou cassette et de manière davantage préférée, lesdits moyens opérationnels (9) réalisant au moins une opération sur au moins une surface principale (4, 5) de la lame ou cassette.

9. Dispositif selon la revendication 8, dans lequel lesdits moyens opérationnels (9) d'au moins une opération sur au moins une lame (2), ou au moins une cassette, sont choisis parmi des moyens de lecture/inscription d'éléments ou codes d'identification (40) des lames (2) ou cassettes, des moyens de marquage au laser, des moyens d'application de produits ou de spécimens de matériau biologique sur la cassette ou lame, ou une combinaison de ceux-ci.

10. Dispositif selon l'une quelconque des revendications précédentes, **caractérisé en ce qu'**il comprend au moins un capteur (20) pour identifier la position des lames (2) ou cassettes, à l'intérieur du contenant (10) et/ou pour détecter le déplacement d'une ou plusieurs lames (2) ou cassettes, à ladite position opérationnelle, de préférence lesdits moyens opérationnels (9) pour réaliser au moins une opération sur au moins une lame (2), ou au moins une cassette, sont couplés audit au moins un capteur (20) pour identifier la position des lames (2) ou cassettes, pour réaliser l'au moins une opération sur la lame prédéterminée.

11. Appareil pour la manipulation de lames (2) et/ou cassettes (3), pour des spécimens de matériau biologique, comprenant au moins un dispositif (1) selon l'une quelconque des revendications précédentes, une pluralité de contenants de support (10) pour supporter une pluralité de lames ou cassettes qui peuvent être insérées dans ledit au moins un dispositif (1), de préférence ledit appareil comprenant en outre au moins une unité de stockage desdits contenants (10).

12. Procédé de manipulation de lames (2) et/ou de cassettes (3) pour des spécimens de matériau biologique, de préférence par le biais d'au moins un dispositif (1) selon l'une quelconque des revendications précédentes, lesdites lames ou cassettes comprenant deux surfaces principales opposées (4, 5) et une ou plusieurs surfaces latérales mineures (6a, 6b, 6c, 6d), et étant insérées et supportées dans au moins un contenant (10) dans au moins une position de repos dans laquelle lesdites cassettes ou lames sont disposées successivement dans une pluralité d'espaces (S), **caractérisé en ce qu'**il comprend l'étape de déplacement d'au moins une lame (2), ou d'au moins une cassette (3), de préférence provisoirement, de ladite position de repos vers au moins une position opérationnelle, tout en maintenant ladite lame ou ladite cassette à l'intérieur dudit contenant (10), par le biais d'au moins un corps (8a) entrant en contact, directement ou indirectement avec au moins une lame (2), ou au moins une cassette, ledit corps comprenant au moins une surface inclinée et/ou courbée (8b) pour déplacer l'au moins une lame (2), ou au moins une cassette (3) de ladite position de repos vers au moins une position opérationnelle, dans lequel lesdits moyens de déplacement (8) sont configurés pour se déplacer par rapport audit au moins un contenant (10) le long d'une ligne (L), ou parallèlement à ladite ligne (L), le long de laquelle les lames (2) ou cassettes (3) sont disposées successivement, de sorte que les lames (2) ou cassettes (3) soient déplacées successivement de ladite position de repos à ladite position opérationnelle.

13. Procédé selon la revendication 12, **caractérisé en ce qu'**il comprend l'étape de réalisation d'au moins une opération sur au moins une lame (2), ou au moins une cassette qui est déplacée à ladite position opérationnelle, de préférence l'étape de réalisation d'au moins une opération sur l'au moins une surface (4, 5, 6a, 6b, 6c, 6d) de la lame (2) ou cassette, et de manière davantage préférée, l'étape de réalisation d'au moins une opération sur au moins une surface principale (4, 5) de la lame ou cassette.

14. Procédé selon la revendication 12 ou 13, **caractérisé en ce qu'**il comprend l'étape d'identification de la position des lames (2) ou cassettes, à l'intérieur de l'au moins un contenant (10).
